# EUROPEAN PATENT APPLICATION

(11) **EP 4 790 295 A1**
(43) Date of publication of application: **12.08.2026**
(21) Application number: 24874386.6
(22) Date of filing: 26.08.2024
(51) Int. Cl.: F16L 11/08, C25B 1/04, C25B 9/00

(54) **MULTILAYER RESIN PIPE, WATER ELECTROLYSIS SYSTEM, AND HYDROGEN TRANSFER METHOD**

(30) Priority: 02.10.2023 JP 2023171434
(71) Applicant: Hitachi, Ltd., Tokyo 100-8280 (JP)
(72) Inventor: FUJITA Shinji, Tokyo 100-8280 (JP); MORITA Hiroshi, Tokyo 100-8280 (JP); KOMESU Daigo, Tokyo 100-8280 (JP)
(74) Representative: Mewburn Ellis LLP
(86) International application number: PCT/JP2024/030238
(87) International publication number: WO 2025/074772

(57) **Abstract**

Provided is a multilayer resin pipe suitable for use in a water electrolysis system operating at high voltage, a water electrolysis system including the multilayer resin pipe, and a method of transporting hydrogen using the multilayer resin pipe. The multilayer resin pipe includes an electrically insulating main pipe, an electrically insulating pressure-resistant layer covering an outer surface of the main pipe, an electrically insulating gas barrier layer covering an inner surface of the main pipe, and an electrically insulating elution-suppressing layer covering an inner surface of the gas barrier layer.

## Description

### Technical Field

The present disclosure relates to a multilayer resin pipe, a water electrolysis system, and a method of transporting hydrogen.

### Background Art

In recent years, hydrogen energy is attracting attention as a clean alternative energy. One of the methods for producing hydrogen is water electrolysis. Water electrolysis systems are used at a low voltage of several hundred volts and a large current of several hundred to several thousand amperes. To reduce hydrogen production cost, efforts are underway to scale up and increase the capacity of water electrolysis systems, and it is expected that water electrolysis systems with a capacity of approximately 500 GW will be put into practical use by 2050. In such water electrolysis systems, a SUS (Steel Use Stainless) piping, which offers excellent leakage prevention and robustness, is used for hydrogen transport.

Patent Literature 1 describes a laminated resin pipe for gas transportation that includes a barrier layer in an intermediate layer.

### Citation List

### Patent Literature

Patent Literature 1: JP 2019-086024 A

### Summary of Invention

### Technical Problem

Water electrolysis stacks used in water electrolysis systems need to be used in conjunction with rectifiers for converting AC power from a power grid into DC. In addition, since water electrolysis stacks need to be driven at a low voltage, they also need to be used with transformers for stepping down power from the power grid. Therefore, electrically connecting a large number of water electrolysis stacks in series can allow a reduction in the number of devices, such as transformers, rectifiers, and the like, leading to the cost-efficient manufacture of large-scale water electrolysis systems.

Each water electrolysis stack in the water electrolysis system needs to be electrically insulated from auxiliary equipment (for example, pumps, tanks, pure water supply equipment, and gas-liquid separators). Otherwise, there is a risk of electric shock if an operator or other personnel touches the auxiliary equipment. In conventional water electrolysis systems, insulation was ensured by an insulating plate provided at an end portion of each water electrolysis stack. However, in a water electrolysis system including a large number of water electrolysis stacks connected in series, some of the water electrolysis stacks reach a high potential exceeding 1 kV. It is difficult to sufficiently insulate such high potential water electrolysis stacks with the above-described insulating plates.

Accordingly, the present inventors considered that the water electrolysis stack could be reliably insulated from auxiliary equipment by using an insulating pipe as a part of the piping, and developed a resin pipe that can be used as a pipe in water electrolysis systems. The present disclosure provides a multilayer resin pipe suitable for use in a water electrolysis system operating at high voltage, a water electrolysis system including the multilayer resin pipe, and a method of transporting (transferring) hydrogen using the multilayer resin pipe.

### Solution to Problem

Aspects of the present disclosure include the following.
[1] A multilayer resin pipe comprising:
   an electrically insulating main pipe;
   an electrically insulating pressure-resistant layer covering an outer surface of the main pipe;
   an electrically insulating gas barrier layer covering an inner surface of the main pipe; and
   an electrically insulating elution-suppressing layer covering an inner surface of the gas barrier layer.
[2] The multilayer resin pipe according to aspect 1,
   wherein the gas barrier layer has a hydrogen permeability coefficient of 0 to 3×10⁻¹⁰ [cm³·cm/cm²/s/cmHg].
[3] The multilayer resin pipe according to aspect 1 or 2,
   wherein the elution-suppressing layer has a component elution amount of 0 µg/m²/day or more and less than 2000 µg/m²/day, and the component elution amount is an ion concentration in liquid over 8 to 30 days as determined by a short-pipe water sealing test method.
[4] The multilayer resin pipe according to any one of aspects 1 to 3,
   wherein the pressure-resistant layer consists of a glass fiber reinforced resin.
[5] The multilayer resin pipe according to any one of aspect 1 to 4,
   wherein the gas barrier layer consists of at least one selected from the group consisting of an ethylene-vinyl alcohol copolymer and a nylon-based resin.
[6] The multilayer resin pipe according to any one of aspect 1 to 5,
   wherein the elution-suppressing layer consists of at least one selected from the group consisting of high-density polyethylene, crosslinked polyethylene, fluorine-based resin, vinyl chloride resin, and polypropylene.
[7] The multilayer resin pipe according to any one of aspect 1 to 6,
   wherein the main pipe consists of at least one selected from the group consisting of high-density polyethylene, crosslinked polyethylene, fluorine-based resin, and vinyl chloride resin.
[8] The multilayer resin pipe according to any one of aspect 1 to 7,
   wherein the main pipe and the elution-suppressing layer consist of a same material.
[9] A water electrolysis system comprising:
   a water electrolysis stack; and
   the multilayer resin pipe according to any one of aspects 1 to 8 connected to the water electrolysis stack.
[10] A method of transporting hydrogen in a water electrolysis system, the method comprising transporting the hydrogen through the multilayer resin pipe according to any one of aspects 1 to 8.

The present specification incorporates the disclosure of Japanese Patent Application No. 2023-171434, which serves as the basis of the priority of the present application.

### Advantageous Effects of Invention

The present disclosure can provide a multilayer resin pipe suitable for use in a water electrolysis system operating at high voltage, a water electrolysis system including the multilayer resin pipe, and a method of transporting hydrogen using the multilayer resin pipe.

### Brief Description of Drawings

Fig. 1 is a schematic diagram illustrating an example of a configuration of a water electrolysis system according to an embodiment.
Fig. 2 is a schematic cross sectional view of a multilayer resin pipe according to the embodiment, taken along a plane perpendicular to the axis of the pipe.
Fig. 3 is a schematic perspective view of the multilayer resin pipe according to the embodiment, with portions of layers omitted to illustrate the layer configuration of the multilayer resin pipe.
Fig. 4A is a schematic end view of an example of a multilayer resin pipe configured for flange connection.
Fig. 4B is a schematic cross-sectional view of an end portion and its vicinity of the multilayer resin pipe, taken along line IVB-IVB in Fig. 4A.
Fig. 5A is a schematic end view of another example of a multilayer resin pipe configured for flange connection.
Fig. 5B is a schematic cross-sectional view of an end portion and its vicinity of the multilayer resin pipe, taken along line VB-VB in Fig. 5A.
Fig. 6 is a schematic cross-sectional view of an end portion and its vicinity of the multilayer resin pipe for threaded connection, taken along a plane including the axis of a multilayer resin pipe.
Fig. 7 is a schematic cross-sectional view of an unreinforced pipe and a mechanical joint attached thereto, taken along a plane including the axis of the unreinforced pipe.
Fig. 8 is a schematic cross-sectional view of a multilayer resin pipe with a main pipe exposed at an end portion and its vicinity, and a mechanical joint attached thereto, taken along a plane including the axis of the unreinforced pipe.

### Description of Embodiments

Embodiments will be described below with reference to the drawings as appropriate. In the drawings referred to in the following description, the same members or members having similar functions are denoted by the same reference numerals, and repeated descriptions thereof may be omitted. For convenience of description, the dimensional ratios and shapes of respective portions in the drawings are exaggerated and may differ from the actual dimensional ratios and shapes.

In the present application, unless otherwise stated, a numerical range expressed using the term "to" includes the numerical values described before and after the term "to" as the lower and upper limits, respectively. The upper and lower limits described in the present application may be used individually or in any arbitrary combination.

In the present application, the terms "comprising" and "including" mean, unless otherwise stated, that additional components or elements may be included, and encompass "consisting essentially of" and "consisting of". The term "consisting essentially of" means that additional components or elements that do not cause a substantial adverse effect may be included. The term "consisting of" means that only the described materials or elements are included, but does not exclude the further inclusion of inevitable impurities.

### (1) Water Electrolysis System

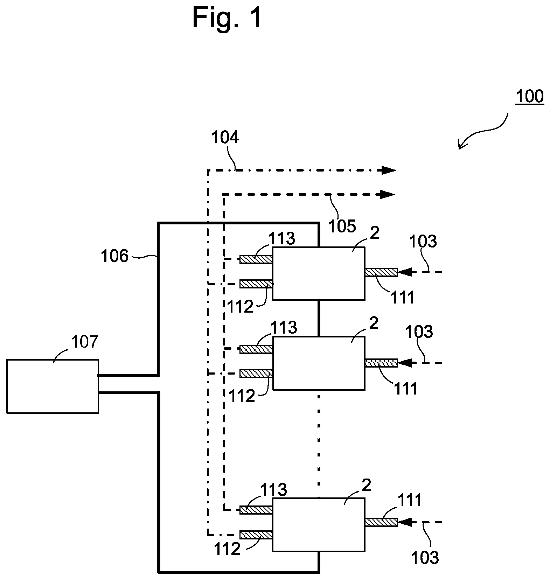

Fig. 1 illustrates an example of a configuration of a water electrolysis system according to an embodiment. A water electrolysis system 100 includes a plurality of water electrolysis stacks 2, and a pure water pipe 111, an oxygen pipe 112, and a hydrogen pipe 113 connected to the water electrolysis stack 2. Typically, the water electrolysis system 100 further includes a DC power supply 107, a power cable 106, and auxiliary equipment (not illustrated) such as pure water supply equipment, a gas-liquid separator, and the like.

Pure water from the pure water supply equipment (not illustrated) is supplied to the water electrolysis stack 2 through a pure water supply line 103. In Fig. 1, the broken-line arrow of the pure water supply line 103 represents a flow direction of the pure water. The pure water is electrolyzed into oxygen and hydrogen in the water electrolysis stack 2. The oxygen is transported from the water electrolysis stack 2 through an oxygen line 104 to a gas tank (not illustrated). Similarly, the hydrogen is transported from the water electrolysis stack 2 through a hydrogen line 105 to a gas tank or a supply destination. In Fig. 1, the chain-line arrow of the oxygen line 104 and the broken-line arrow of the hydrogen line 105 respectively represent the flow directions of the oxygen and the hydrogen. The hydrogen and the oxygen from the water electrolysis stack 2 are generally accompanied by moisture. Therefore, a gas-liquid separator (not illustrated) and/or a dehumidifier (not illustrated) for separating moisture from the hydrogen or the oxygen may be provided in the oxygen line 104 and the hydrogen line 105.

The plurality of water electrolysis stacks 2 are electrically connected to the DC power supply 107 via the power cable 106. The DC power supply 107 supplies a DC power to the water electrolysis stack 2. The plurality of water electrolysis stacks 2 are electrically connected in series. It should be noted that, in Fig. 1, all the water electrolysis stacks 2 are connected in series. However, some of the water electrolysis stacks 2 may be connected in a parallel. For example, a plurality of groups, each consisting of a plurality of water electrolysis stacks 2 electrically connected in parallel, may be electrically connected in series. In the water electrolysis system 100 according to the embodiment, since the plurality of water electrolysis stacks 2 are connected in series, some of the water electrolysis stacks 2 reach a high electric potential during operation of the water electrolysis system 100. The highest electric potential of the water electrolysis stack 2 is given by (the operating voltage of one water electrolysis stack 2) × (the number of water electrolysis stacks 2 connected in series).

An electrically insulating pure water pipe 111 is provided in at least a part of the pure water supply line 103, an electrically insulating oxygen pipe 112 is provided in at least a part of the oxygen line 104, and an electrically insulating hydrogen pipe 113 is provided in at least a part of the hydrogen line 105. Thus electrically insulates the water electrolysis stack 2 from the auxiliary equipment, thereby preventing electric shocks to operators or other personnel caused by high-voltage electricity from the water electrolysis stack 2 when they touch the auxiliary equipment.

A multilayer resin pipe according to the embodiment described later can be used as the hydrogen pipe 113. It is desirable that the hydrogen pipe 113 satisfy the following requirements.

### i. Having Pressure Resistance Capable of Withstanding Pressure of Gas Flowing Inside Pipe

For example, when both ends of the hydrogen pipe 113 are sealed and a hydrostatic pressure of 1.25 times the design pressure is applied for 1 minute, it is desirable that no water leakage, deformation, damage, or other abnormality occur in the hydrogen pipe 113.

### ii. Being Electrically Insulating

It is desirable that the hydrogen pipe 113 have a resistivity of 10⁸ Ω·cm or more at 80°C. The resistivity of the hydrogen pipe 113 at 80°C may be 10⁸ to 10¹⁸ Ω·cm. For example, the resistivity can be measured using an insulation resistance meter or a method in accordance with JIS K 6911-2006.

### iii. Being Resistant to Elution of Pipe Components into Water

As described above, the hydrogen from the water electrolysis stack 2 is generally accompanied by moisture. It is desirable that moisture be separated from hydrogen by a gas-liquid separator and/or a dehumidifier (not illustrated) and recirculated to the pure water supply line. When water is recirculated, it is desirable that the recirculated water contain no impurity, or that the impurity content be sufficiently small. Therefore, it is desirable that elution of the components of the hydrogen pipe 113 into the moisture be prevented or sufficiently reduced.

### iv. Having Pipe Wall with High Gas Barrier Property (that is, Low Hydrogen Permeability)

In order to prevent leakage of hydrogen, it is desirable that the hydrogen pipe 113 have, under conditions of a hydrogen gas pressure of 3 MPa, a hydrogen permeation amount of 0 cm³/m/h or more and 100 cm³/m/h or less, particularly 0 cm³/m/h or more and 10 cm³/m/h or less. The above-described hydrogen permeation amount represents the volume of hydrogen that leaks per hour from inside a pipe having a length of 1 m to outside the pipe. For example, the hydrogen permeation amount can be measured by a differential pressure method in accordance with JIS K 7126-2:2006 under conditions of 80°C.

It is desirable that the pure water pipe 111 and the oxygen pipe 112 also satisfy the above requirements i to iii. It should be noted that the pure water pipe 111 and the oxygen pipe 112 do not need to have a gas barrier property as high as that of the hydrogen pipe 113. The multilayer resin pipe according to the embodiment described later can also be used as the pure water pipe 111 and/or the oxygen pipe 112.

Furthermore, it is desirable that the hydrogen pipe 113, the pure water pipe 111, and the oxygen pipe 112 optionally satisfy the following requirement.

### v. Having Heat Resistance Capable of Withstanding Operating Temperature of Water Electrolysis Stack 2

Since the operating temperature of the water electrolysis stack 2 is reaches 60°C to 80°C at a maximum, it is desirable that the hydrogen pipe 113, the pure water pipe 111, and the oxygen pipe 112 have a heat resistance temperature of 80°C or higher, and at least a heat resistance temperature of at least 60°C is required.

### (2) Multilayer Resin Pipe

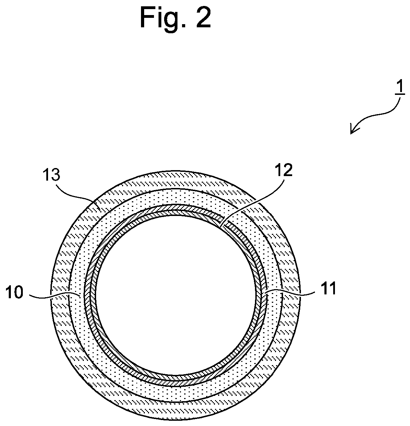

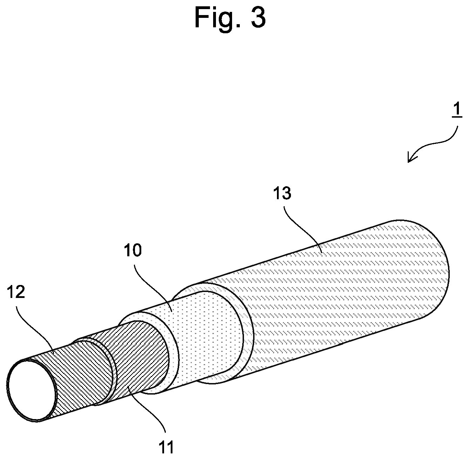

The multilayer resin pipe 1 according to the embodiment illustrated in Figs. 2 and 3 can satisfy the above requirements, and therefore the multilayer resin pipe 1 can be suitably used in a water electrolysis system operating at high voltage.

The multilayer resin pipe 1 according to the embodiment includes an electrically insulating main pipe 10, an electrically insulating pressure-resistant layer 13 covering an outer surface of the main pipe 10, an electrically insulating gas barrier layer 11 covering an inner surface of the main pipe 10, and an electrically insulating elution-suppressing layer 12 covering an inner surface of the gas barrier layer 11. In other words, the multilayer resin pipe 1 has the pressure-resistant layer 13 as the outermost layer, the elution-suppressing layer 12 as the innermost layer, the main pipe 10 provided between the pressure-resistant layer 13 and the elution-suppressing layer 12, and the gas barrier layer 11 provided between the main pipe 10 and the elution-suppressing layer 12. The main pipe 10, the pressure-resistant layer 13, the gas barrier layer 11, and the elution-suppressing layer 12 each have a tubular shape.

### 2-1) Main Pipe 10

The main pipe 10 consists of an electrically insulating thermoplastic resin or an electrically insulating thermosetting resin. The main pipe 10 may have a resistivity of 10⁸ Ω·cm or more at 80°C. The resistivity at 80°C may be 10⁸ to 10¹⁸ Ω·cm. Additionally, the main pipe 10 may have a continuous use temperature of 60°C or higher. The continuous use temperature may be 60 to 180°C, or may be even higher. For example, the continuous use temperature can be measured in accordance with the UL standard UL 746B by Underwriters Laboratories.

For example, the main pipe 10 may include at least one selected from the group consisting of high-density polyethylene (HDPE), crosslinked polyethylene, fluorine-based resin, and vinyl chloride resin, may consist essentially of at least one selected from the group, or may consist of at least one selected from the group. The main pipe 10 may further contain an additive such as a viscosity modifier. Also, from the viewpoint of stable manufacture of the multilayer resin pipe 1, the main pipe 10 may consist of the same material as the elution-suppressing layer 12 described later.

### 2-2) Pressure-Resistant Layer 13

The pressure-resistant layer 13 consists of a fiber reinforced resin consisting of an electrically insulating thermoplastic resin or an electrically insulating thermosetting resin and an electrically insulating fiber material. The pressure-resistant layer 13 may consist of a glass fiber reinforced resin. For example, the pressure-resistant layer 13 may consist of a glass fiber reinforced resin consisting of thermosetting epoxy and glass fiber. The pressure-resistant layer 13 may have a resistivity of 10⁸ Ω·cm or more at 80°C. The resistivity at 80°C may be 10⁸ to 10¹⁸ Ω·cm. Additionally, the pressure-resistant layer 13 may have a continuous use temperature of 80°C or higher. The continuous use temperature may be 60 to 180°C, or may be even higher.

The pressure-resistant layer 13 has high pressure resistance. For example, when both ends of the pressure-resistant layer 13 are sealed and a hydrostatic pressure of 1.25 times the design pressure is applied for 1 minute, it is desirable that no water leakage, deformation, damage, or other abnormality occur in the hydrogen pipe 113. Accordingly, damage, deformation, or the like of the multilayer resin pipe 1 by the high-pressure fluid being transported inside the multilayer resin pipe 1 is prevented or reduced, and the water electrolysis system can be operated safely.

### 2-3) Gas Barrier Layer 11

The gas barrier layer 11 consists of an electrically insulating thermoplastic resin or an electrically insulating thermosetting resin. The gas barrier layer 11 may have a resistivity of 10⁸ Ω·cm or more at 80°C. The resistivity at 80°C may be 10⁸ to 10¹⁸ Ω·cm. Additionally, the gas barrier layer 11 may have a melting point of 80°C or higher. The melting point may be 80 to 180°C, or may be even higher. For example, the melting point of the gas barrier layer 11 can be measured by differential scanning calorimetry (DSC) in accordance with JIS K 7121:2012.

In addition, the gas barrier layer 11 may have a hydrogen permeability coefficient of 0 to 3×10⁻¹⁰ [cm³·cm/cm²/s/cmHg]. Thereby, for example, a multilayer resin pipe 1 of JIS standard size 25A (inner diameter: 27.6 mm, outer diameter: 34.0 mm, wall thickness: 3.2 mm) can, under a condition of a hydrogen gas pressure of 3 MPa, have a hydrogen permeation amount of 0 to 100 cm³/m/h, in particular 0 to 10 cm³/m/h or less, and leakage of the hydrogen being transported inside the multilayer resin pipe 1 to the outside of the multilayer resin pipe 1 is prevented or sufficiently reduced. For example, in a case where the JIS standard size of the multilayer resin pipe 1 is 25A, the gas barrier layer 11 has a hydrogen permeability coefficient of 1×10⁻¹⁰ [cm³·cm/cm²/s/cmHg], the gas barrier layer 11 has a thickness of 1.0 mm, and the elution-suppressing layer 12 has a thickness of 0.2 mm, the multilayer resin pipe 1 has a hydrogen permeation amount of 7.1 cm³/m/h under a condition of a hydrogen gas pressure of 3 MPa. It should be noted that the value of the above-described hydrogen permeability coefficient represents the volume of hydrogen that permeates per second through a gas barrier layer 11 having a thickness of 1 cm and an area of 1 cm² at a hydrogen gas pressure of 1 cmHg. For example, the hydrogen permeability coefficient can be measured in accordance with JIS K 7126-2:2006 under a condition of 80°C.

The gas barrier layer 11 may, for example, consist of at least one selected from the group consisting of a nylon-based resin such as nylon 6 and nylon 11, and an ethylene-vinyl alcohol copolymer resin. These resins have a high hydrogen gas barrier property. Specifically, the hydrogen permeability coefficient of nylon 6 is about 1/6 of that of high-density polyethylene, and the hydrogen permeability coefficient of ethylene-vinyl alcohol copolymer resin is about 1/60 of that of high-density polyethylene. The thickness of the gas barrier layer 11 may be determined based on the hydrogen permeability coefficient of the resin constituting the gas barrier layer 11, an allowable hydrogen permeation amount, the gas pressure and temperature of the hydrogen flowing in the multilayer resin pipe 1, and the pipe diameter and the pipe length, and the like, of the multilayer resin pipe 1.

### 2-4) Elution-Suppressing Layer 12

The elution-suppressing layer 12 consists of an electrically insulating thermoplastic resin or an electrically insulating thermosetting resin from which components are less likely to be eluted into water. The main pipe 10 may have a resistivity of 10⁸ Ω·cm or more at 80°C. The resistivity at 80°C may be 10⁸ to 10¹⁸ Ω·cm. Additionally, the main pipe 10 may have a continuous use temperature of 80°C or higher. The continuous use temperature may be 60 to 180°C, or may be even higher.

The component elution amount of the elution-suppressing layer 12 may be 0 µg/m²/day or more and less than 2000 µg/m²/day. Thereby, elution of impurities into water passing through the inside of the multilayer resin pipe 1 can be prevented or sufficiently reduced. The component elution amount of the elution-suppressing layer 12 is an ion concentration in liquid over 8 to 30 days by a short-pipe water sealing test method. For example, the ion concentration can be measured by ICP emission spectrometry (radiofrequency inductively coupled plasma emission spectrometry). The elution-suppressing layer 12 may consist of, for example, at least one selected from the group consisting of high-density polyethylene, crosslinked polyethylene, fluorine-based resin, vinyl chloride resin, and polypropylene. The thickness of the elution-suppressing layer 12 is not particularly limited, provided that elution of impurities from the multilayer resin pipe 1 into water can prevented or sufficiently reduced and that the multilayer resin pipe 1 can have a wall thickness specified by standards.

### (3) Manufacturing Method for Multilayer Resin Pipe

An example of a manufacturing method for the multilayer resin pipe 1 according to the embodiment is described below.

First, an unreinforced pipe consisting of the main pipe 10 as an outermost layer, an elution-suppressing layer 12 as an innermost layer, and a gas barrier layer 11 provided between the main pipe 10 and the elution-suppressing layer 12 is formed by co-extrusion molding. Co-extrusion molding allows the formation of a seamless unreinforced pipe. Such a seamless unreinforced pipe can exhibit an excellent gas barrier property because hydrogen leakage via seams is prevented.

The main pipe 10 and the elution-suppressing layer 12 may consist of the same material. In that case, the adhesive strength between the main pipe 10 and the gas barrier layer 11 and the adhesive strength between the gas barrier layer 11 and the elution-suppressing layer 12 are equal, and the coefficients of thermal expansion of the main pipe 10 and the elution-suppressing layer 12 are equal. This allows a high-quality unreinforced pipe to be stably formed by co-extrusion molding.

Subsequently, the pressure-resistant layer 13 is formed on the outer surface of the unreinforced pipe to obtain the multilayer resin pipe 1. Specifically, a fiber cloth consisting of fibers such as glass fiber is wound around the outer surface of the unreinforced pipe, the fiber cloth is impregnated with a resin composition, and the resin composition is cured. The winding of the fiber cloth, the impregnation with the resin composition, and the curing of the resin composition are further repeated a plurality of times. Thereby, the pressure-resistant layer 13 is formed.

### (4) Connection of Multilayer Resin Pipe

An example of a structure that is provided in the multilayer resin pipe 1 for connecting the multilayer resin pipe 1 according to the embodiment to equipment such as the water electrolysis stack 2 is described below. It should be noted that the multilayer resin pipe 1 and the water electrolysis stack 2 may be connected to each other by a method other than the examples described below.

### 4-1) Flange Connection

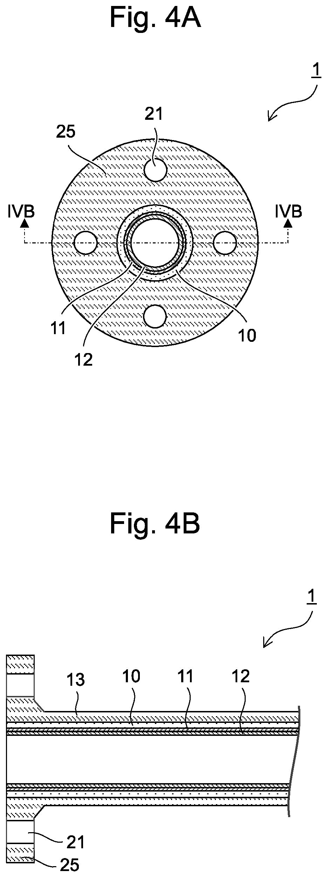

The multilayer resin pipe 1 can be connected to equipment by a flange connection. Figs. 4A and 4B illustrate an example of the structure of an end portion and its vicinity of the multilayer resin pipe 1 that is configured for a flange connection. A flange portion 25 is provided at the end portion of the multilayer resin pipe 1. The flange portion 25 is provided with bolt holes 21. The flange portion 25 may be formed of the same material as the pressure-resistant layer 13. The flange portion 25 may be formed integrally with the pressure-resistant layer 13.

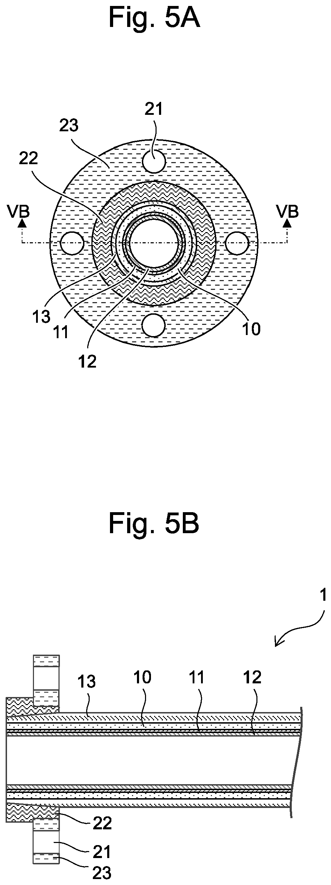

Another example of the structure of the end portion and its vicinity of the multilayer resin pipe 1 configured for a flange connection is illustrated in Figs. 5A and 5B. At the end portion of the multilayer resin pipe 1 and in the vicinity thereof, the pressure-resistant layer 13 is machined (see Fig. 5B), and a loose flange 23, which is provided with the bolt holes 21, and an adapter 22 are attached to the outer surface of the machined pressure-resistant layer 13. The adapter 22 and the loose flange 23 can be attached to the end portion of the multilayer resin pipe 1 after cutting the multilayer resin pipe 1 to a desired length. In this respect, the flange connection using the loose flange 23 is highly convenient.

### 4-2) Thread-Connection

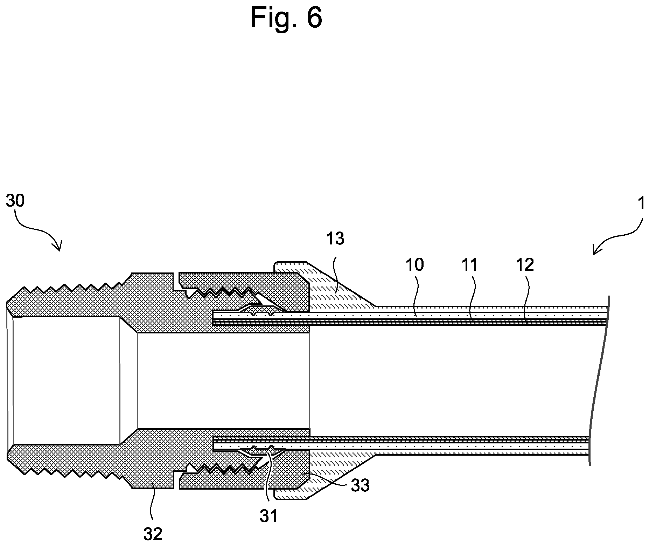

The multilayer resin pipe 1 can be connected to equipment such as the water electrolysis stack 2 by thread-connection. An example of the structure of the end portion and its vicinity of the threadedly connected multilayer resin pipe 1 is illustrated in Fig. 6. As illustrated in Fig. 6, a mechanical joint 30 is attached to an end portion of the multilayer resin pipe 1. The mechanical joint 30 consists of a clamping ring 31, a joint body 32, and a cap nut 33. The clamping ring 31 and the cap nut 33 are attached to the outer surface of the main pipe 10. The joint body 32 is threaded into the cap nut 33, and thereby the cap nut 33 presses the clamping ring 31 and causes the clamping ring 31 to bite into the main pipe 10. The clamping ring 31 attached to the outer surface of the main pipe 10 does not damage the gas barrier layer 11, the elution-suppressing layer 12, or the pressure-resistant layer 13 at all or almost at all. Therefore, the mechanical joint 30 can be attached to the multilayer resin pipe 1 without impairing at all or almost at all the gas barrier property, the ion elution suppression performance, or the pressure resistance of the multilayer resin pipe 1.

The pressure-resistant layer 13 may cover a part of the cap nut 33. The pressure-resistant layer 13 forms a protrusion in a portion covering the cap nut 33. This protrusion may have a tapered shape. That is, a taper may be provided between the portion of the pressure-resistant layer 13 that covers the cap nut 33 and the portion of the pressure-resistant layer 13 that covers the main pipe 10. Additionally, an end portion of the pressure-resistant layer 13 covering the cap nut 33 may be rounded. By these shapes, electric field concentration is mitigated, and stress due to the internal pressure of the multilayer resin pipe 1 is dispersed.

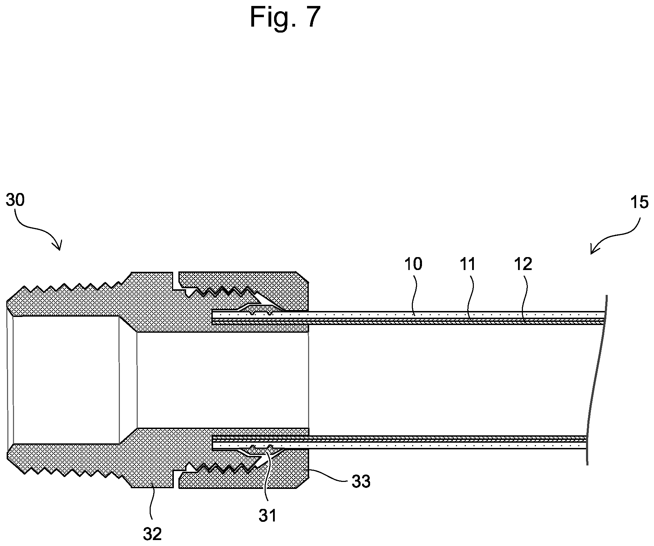

An example of a method of attaching the mechanical joint 30 to the multilayer resin pipe 1 is described below. As illustrated in Fig. 7, an unreinforced pipe 15 consisting of a main pipe 10 as an outermost layer, an elution-suppressing layer 12 as an innermost layer, and a gas barrier layer 11 provided between the main pipe 10 and the elution-suppressing layer 12 (that is, the pressure-resistant layer 13 is not provided) is inserted sequentially into a cap nut 33 and a clamping ring 31, and then a joint body 32 is threaded into the cap nut 33 and tightened. Thereafter, the pressure-resistant layer 13 is formed so as to cover the main pipe 10 and a part of the cap nut 33. Accordingly, the multilayer resin pipe 1 to which the mechanical joint 30 attached at the end portion as illustrated in Fig. 6 is obtained.

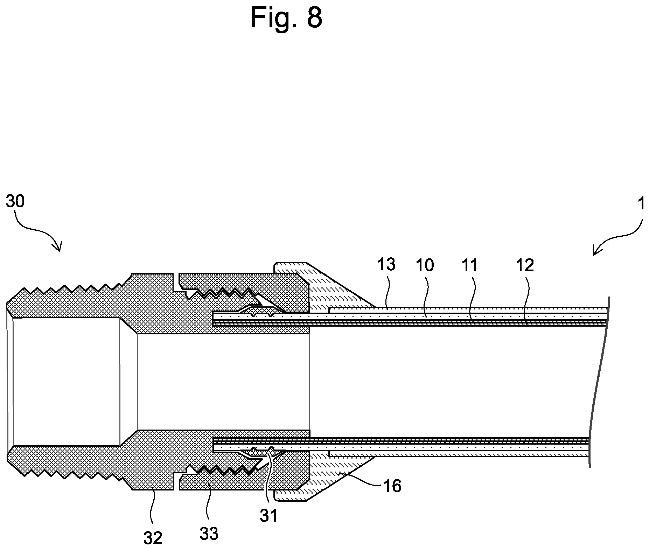

In another example of the method of attaching the mechanical joint 30 to the multilayer resin pipe 1, as illustrated in Fig. 8, the pressure-resistant layer 13 is peeled off at the end portion and its vicinity of the multilayer resin pipe 1 to expose the main pipe 10. The cap nut 33 and the clamping ring 31 are attached to the outer surface of the exposed main pipe 10, and then the joint body 32 is threaded into the cap nut 33 and tightened. Thereafter, an additional pressure-resistant layer 16 is formed so as to cover the exposed main pipe 10, an end portion and its vicinity of the pressure-resistant layer 13, and a part of the cap nut 33. Thereby, the multilayer resin pipe 1 to which the mechanical joint 30 is attached at the end portion is obtained. The additional pressure-resistant layer 16 may consist of the same material as the pressure-resistant layer 13.

As described above, a description of embodiments of the present disclosure has been given, but the present disclosure is not limited to the above embodiment, and various modifications can be made without departing from the spirit of the claims. For example, the present disclosure is not necessarily limited to those having all the configurations included in the above embodiment. It is possible to replace a part of the configuration of an embodiment with another configuration, to add a part of the configuration of an embodiment to another mode, and/or to omit a part of the configuration of an embodiment.

All publications, patents, and patent applications cited in the present specification are hereby incorporated by reference in their entirety.

### Example

Hereinafter, a specific description of the present invention will be given by examples; however, the technical scope of the present invention is not limited to these examples.

An unreinforced pipe (JIS standard size: 25A) consisting of a main pipe consisting of high-density polyethylene (continuous use temperature 121°C) as the outermost layer, an elution-suppressing layer consisting of high-density polyethylene (continuous use temperature 121°C) as the innermost layer, and a gas barrier layer (thickness 0.6 mm) provided between the main pipe and the elution-suppressing layer and consisting of ethylene-vinyl alcohol copolymer (melting point 160°C) was formed by co-extrusion molding. The hydrogen permeability coefficient of the unreinforced pipe was measured in accordance with JIS K 7126-2:2006 under conditions of 80°C. The hydrogen permeability coefficient was 8.4×10⁻¹¹ [cc·cm/cm²/s/cmHg], indicating good gas barrier property. A pressure-resistant layer consisting of glass fiber reinforced resin (continuous use temperature 150°C) consisting of thermosetting epoxy and glass fiber was formed on the outer surface of the unreinforced pipe, and a multilayer resin pipe was obtained.

### Reference Signs List

1 Multilayer resin pipe
2 Water electrolysis stack
10 Main pipe
11 Gas barrier layer
12 Elution-suppressing layer
13 Pressure-resistant layer
15 Unreinforced pipe
21 Bolt hole
22 Adapter
23 Loose flange
25 Flange portion
30 Mechanical joint
31 Clamping ring
32 Joint body
33 Cap nut
100 Water electrolysis system
103 Pure water supply line
104 Oxygen line
105 Hydrogen line
106 Power cable
107 DC power supply
111 Pure water pipe
112 Oxygen pipe
113 Hydrogen pipe

## Claims

1. A multilayer resin pipe comprising:
an electrically insulating main pipe;
an electrically insulating pressure-resistant layer covering an outer surface of the main pipe;
an electrically insulating gas barrier layer covering an inner surface of the main pipe; and
an electrically insulating elution-suppressing layer covering an inner surface of the gas barrier layer.

2. The multilayer resin pipe according to claim 1,
wherein the gas barrier layer has a hydrogen permeability coefficient of 0 to 3×10⁻¹⁰ [cm³·cm/cm²/s/cmHg].

3. The multilayer resin pipe according to claim 1,
wherein the elution-suppressing layer has a component elution amount of 0 µg/m²/day or more and less than 2000 µg/m²/day, and the component elution amount is an ion concentration in liquid over 8 to 30 days as determined by a short-pipe water sealing test method.

4. The multilayer resin pipe according to claim 1,
wherein the pressure-resistant layer consists of a glass fiber reinforced resin.

5. The multilayer resin pipe according to claim 1,
wherein the gas barrier layer consists of at least one selected from the group consisting of an ethylene-vinyl alcohol copolymer and a nylon-based resin.

6. The multilayer resin pipe according to claim 1,
wherein the elution-suppressing layer consists of at least one selected from the group consisting of high-density polyethylene, crosslinked polyethylene, fluorine-based resin, vinyl chloride resin, and polypropylene.

7. The multilayer resin pipe according to claim 1,
wherein the main pipe consists of at least one selected from the group consisting of high-density polyethylene, crosslinked polyethylene, fluorine-based resin, and vinyl chloride resin.

8. The multilayer resin pipe according to claim 1,
wherein the main pipe and the elution-suppressing layer consist of a same material.

9. A water electrolysis system comprising:
a water electrolysis stack; and
the multilayer resin pipe according to any one of claims 1 to 8 connected to the water electrolysis stack.

10. A method of transporting hydrogen in a water electrolysis system, the method comprising transporting the hydrogen through the multilayer resin pipe according to any one of claims 1 to 8.
